# EUROPEAN PATENT APPLICATION

(11) **EP 3 430 953 A1**
(43) Date of publication of application: **23.01.2019**
(21) Application number: 18184415.0
(22) Date of filing: 19.07.2018
(51) Int. Cl.: A47J 31/36, A47J 31/06

(54) **INFUSION GROUP FOR MACHINES FOR THE PREPARATION OF BEVERAGES**

(30) Priority: 21.07.2017 IT 201700083713
(71) Applicant: BARDAZZI, Bruno, 50059 Vinci FI (IT)
(72) Inventor: BARDAZZI, Bruno, 50059 Vinci FI (IT)
(74) Representative: Leucci, Lidia

(57) **Abstract**

Infusion group (20) for machines for preparing beverages which use prepackaged charges, comprising: an infusion chamber (1) intended to house the container body (10) of a prepackaged charge of edible material, said infusion chamber (1) being provided with means for collecting and dispensing the prepared beverage (22, 23); a pressurized water supply head (102), designed to mate with said infusion chamber so as to allow dispensing of the beverage, expelling means of the exhausted prepackaged charge being provided in said infusion group; said expulsion means comprise a wall (301), substantially arranged in close proximity to the bottom wall of said infusion chamber (201), having substantially the same dimensions as said bottom wall (201), provided with a plurality of through openings for a substantial portion of its surface, and moving along a direction parallel to the longitudinal axis of said infusion chamber (1), and coupled in its movement to the means allowing the coupling and separation of the infusion chamber (1) with the said supply head (102).

## Description

The present invention relates to an infusion group for beverage preparation machines which use prepackaged charges of edible material. In particular, the present invention relates to an infusion group for machines for preparing beverages capable of using prepackaged charges whose container body is made of paper or similar highly hygroscopic material.

Numerous machines for preparing beverages using prepackaged charges are known to the state of the art; in general, machines are provided in which the exhausted prepacked charge is manually removed from the infusion chamber in which it is placed, just as manually, as there are machines in which the prepackaged charge is inserted by a special opening in the machine frame, and then, at the end of the extraction / dissolution of the edible product contained therein, it is ejected into a suitable collection container by means of a device associated with the infusion group of the aforesaid machine.

While the prepackaged charges of plastic material generally have a structural rigidity such as to allow the use in machines provided with automatic expulsion devices, the prepackaged charges in paper or similar hygroscopic material are much more difficult to treat, since the material in question loses on the one hand rigidity, while on the other side it also increases considerably in volume, making the expulsion of the prepackaged charge from the infusion chamber definitely problematic.

A solution to this problem is provided in the document WO2000044268A1, wherein an infusion chamber consisting of two half-shells capable of receiving the prepackaged charge is described, in this case a paper-filter wafer or similar flexible material, which are suitably inclined first to receive, then to extract the infusion, and then to expel the prepackaged charge. All this naturally with a decidedly complex structure, decidedly suited above all to prepackaged charges with a lenticular shape and an elliptical longitudinal section.

Another solution intended to allow the automatic expulsion of prepackaged charges introduced manually into a beverage preparation machine is that described in the document EP 2522260B1, of which the present applicant is one of the designated inventors, relating to an expulsion system for prepackaged charges which exploits a means suitable for interacting with the radial flange projecting from the end of the container body of the prepackaged charge and of the temporary coupling means of said means with a wall of the machine frame. However, this solution depends on the consistency that said radial flange, and more generally the whole container body of the prepackaged charge, maintains at the end of the extraction / dissolution step of the edible substance contained in the prepackaged charge. This solution, although decidedly more adaptable than the one mentioned above, still strongly depends on the type of container body used for making the prepackaged charge.

Similarly, in the document US2014/141140 an infusion group is described in which a movable element, like a pin, emerges from the bottom wall of the infusion chamber, able to act as ejector of the prepacked charge at the end of the infusion, its movement being connected to the coupling and decoupling movement of the two portions forming the infusion chamber. A substantially similar solution is that described in document US2015/173559, which also has a pin capable of emerging from the bottom wall of the infusion chamber. Both these expulsion systems are decidedly aimed at prepackaged charges equipped with relatively rigid container bodies, and certainly made of impermeable and non-hygroscopic material, which would be torn or punctured by the action of an expeller finger.

If, on the one hand, for the manageability and the possibility of protecting the product contained inside, the container bodies of many prepackaged charges are made of plastic or metallic material, or suitably coupled multilayer, on the other, the environmental impact of this type of packaging, especially with the ever-increasing use of this type of machine, suggests turning to materials that make, on the whole, the exhausted prepackaged charge a directly compostable waste which, given the excellent fertilizing characteristics of the coffee powder, would add " virtuous "value to the terminal phase of this supply chain.

With this perspective, the choice lies in developing a mechanically performing biodegradable material, and therefore able to be easily used in machines for preparing beverages with rather simple expulsion means, or using the simplest and most common biodegradable material to process. , i.e. the cellulose of vegetable origin in the form of paper or cardboard or non-woven or similar, and consequently refine the expulsion means to be used in making the infusion group of the beverage preparation machine.

It is therefore an aim of the present invention to provide an infusion group for machines for preparing beverages in which the expulsion of prepackaged charges is guaranteed even if they are made of highly hygroscopic material, which then loses, following the injection of pressurized water. , a large part of its mechanical properties, while maintaining the possibility of being used also with prepackaged charges of mechanically more tenacious materials, such as plastics or the like.

An object of the present invention is therefore an infusion group for machines for preparing beverages which use prepackaged charges, comprising: an infusion chamber intended to house the container body of a prepackaged charge of edible material, said infusion chamber being provided with means for collecting and dispensing the prepared beverage; a pressurized water supply head, designed to mate with said infusion chamber so as to allow dispensing of the beverage, expelling means of the exhausted prepackaged charge being provided in said infusion group; said expulsion means comprise a wall, substantially arranged in close proximity to the bottom wall of said infusion chamber, having substantially the same dimensions as said bottom wall, provided with a plurality of through openings for a substantial portion of its surface, and moving along a direction parallel to the longitudinal axis of said infusion chamber, and coupled in its movement to the means allowing the coupling and separation of the infusion chamber with the said supply head.

In a first embodiment, this movable wall is formed by a plurality of strips equidistant from each other. Advantageously, said wall is housed in a series of cavities formed in the bottom wall of the infusion chamber, and connected with the collection and dispensing means of the beverage. Furthermore, it can be provided that the mobile wall is provided with means suitable for cleaning the collection channels of the beverage.

In another embodiment variant, the pressure water supply head is also provided, near the wall from which the water supply means protrude, of a similar movable wall as provided in the infusion chamber.

Further advantages and characteristics will become clear from the following description of an embodiment of the device according to the present invention, given by way of non-limiting example with reference to the attached drawings, in which:
Figure 1 is a perspective view of a machine, shown in transparency, in which the infusion group according to the present invention is used;
Figure 2 is a schematic longitudinal section view of a first embodiment of the infusion group according to the present invention, shown at the time of introduction of the prepackaged charge;
Figure 3 is a front elevational view of the infusion chamber of the infusion group of Figure 2;
Figure 4 is a perspective view of the infusion chamber of Figure 3;
Figures 5 to 8 illustrate the infusion group of Figure 2, in the subsequent operating steps up to the expulsion of the prepackaged charge;
Figure 9 illustrates a second embodiment of the infusion group of the present invention in top plan, in the infusion step of the beverage;
Figure 10 is a view similar to that of Figure 9, in which the infusion group is illustrated in the step of expelling the prepackaged charge.

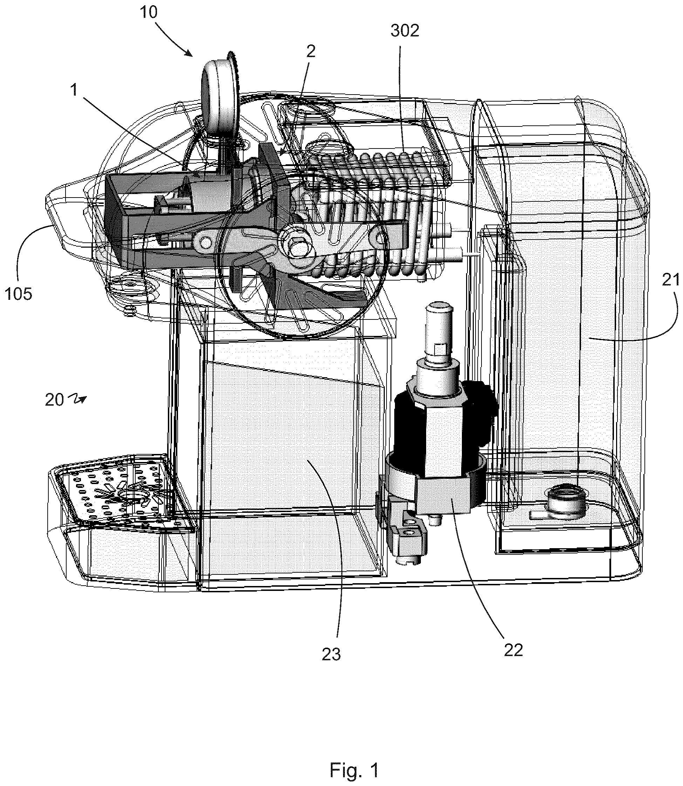

Figure 1 schematically shows the infusion group according to the present invention, inserted in a beverage preparation machine, shown in transparency. The machine 20 comprises the infusion group suitable for cooperating with the pre-packaged charge 10, consisting of the feeding head 2 of the pressurized water, in the case heated by the heating means 302, and of the infusion chamber 1; their mutual coupling and decoupling movement is operated by the handle 105, in the manner hereinafter better described and illustrated. The machine 20 further comprises the tank 21, the feed pump 22 and the collecting container 23 of the exhausted prepackaged charges.

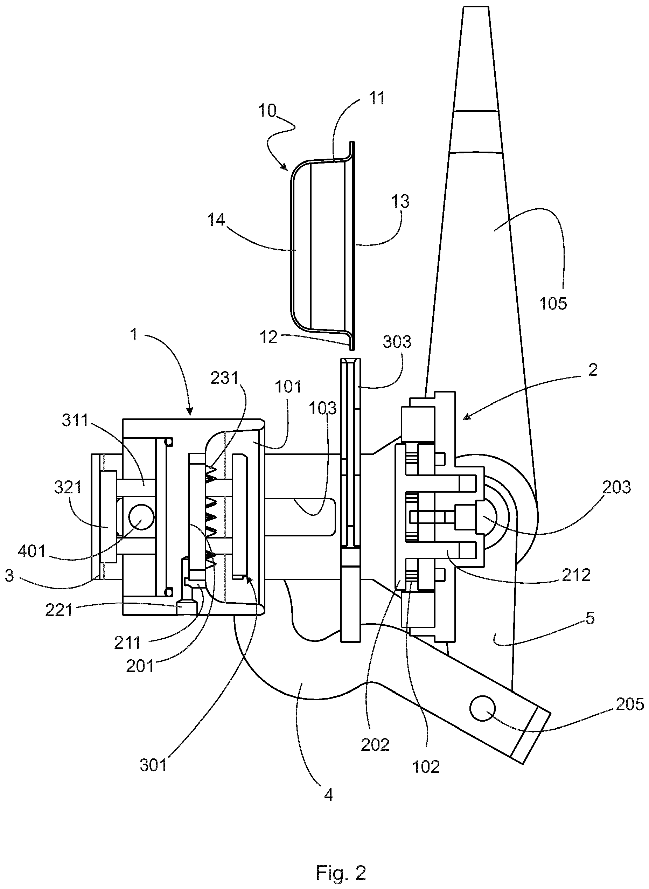

Figure 2 schematically illustrates an embodiment of the infusion group according to the present invention, shown at the time of introduction of a prepacked charge; the infusion chamber of a beverage preparation machine is designated with 1. This chamber has the continuous side walls, tapered towards the end wall 201. From the bottom wall protrude the perforating means 231, and a manifold 211 of the beverage produced is provided which communicates with the delivery duct 221. Near the wall of bottom 201 there is arranged a movable wall 301 supported on the rods 311, which at the opposite end are connected by a crosspiece 321.

The infusion chamber 1 is connected, by means of a pin 401 to a lever 4, and the pin 401 moves along the slot 103 of the frame 3 at one end of which the feeding head 2 is arranged, which comprises the supply ducts 102, and a movable wall 102 supported by the rods 212. On the frame 3 there is a rotating pin 203 on which are connected the arm 5, pivoted to the other end with the lever 4, and the handle 105, arranged in opposition to the aforesaid arm 5. On the frame 3 a guide 303 is arranged, adapted to cooperate with the annular flange 12 projecting from the side wall 11 of the prepacked charge 10, provided with a closing wall 13 coupled to said flange 12, and a bottom wall 14.

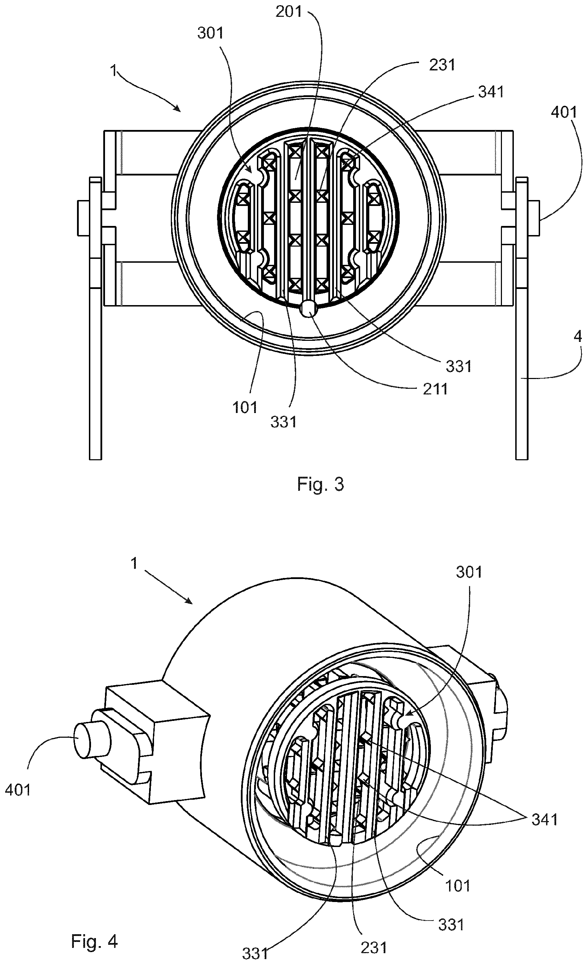

Figure 3 shows in front elevation the infusion chamber of the infusion group according to the present invention; the equal parts correspond to the same numerals. In the figure it is shown that the movable wall 301 of the infusion chamber 1 is formed by a plurality of strips, substantially equidistant from each other, which alternate with the bottom wall portions 201 provided with the perforating means 231. The reliefs 241 radially protrude from the strips, as can best be seen in the perspective view of Figure 4.

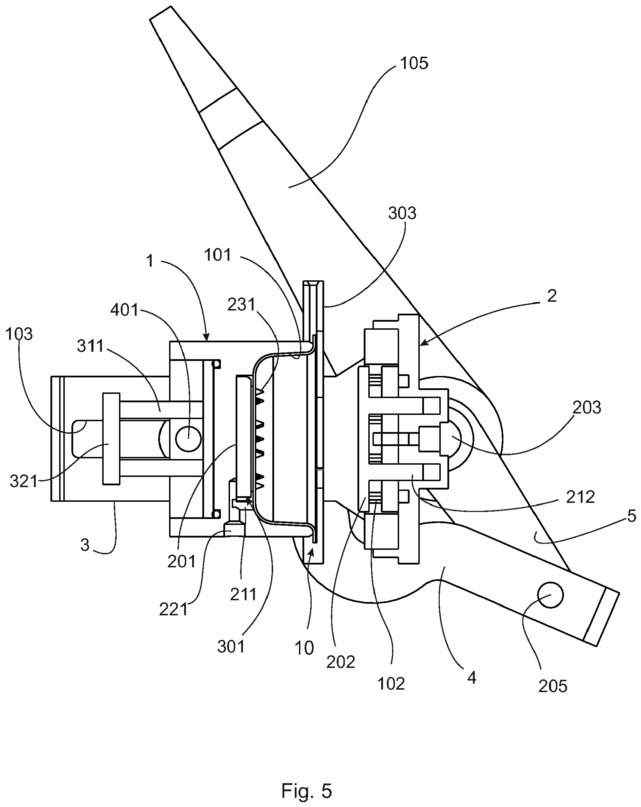

The operation of the infusion group according to the present invention will be apparent from the following, and with particular reference to Figures 5 to 8, in which the steps subsequent to that of Figure 2 are illustrated until the exhausted prepackaged charge is ejected. As mentioned in the introduction to the present application, this infusion group is mainly, though not exclusively directed to the use of prepackaged charges of highly hygroscopic cellulosic material or similar, and therefore difficult to handle once the water has been fed and the drink dispensed.

The prepackaged charge 10 is inserted into the guide 303 and from there, as shown in Figure 5, is received inside the infusion chamber 1, which has moved towards the guide 303 by virtue of the movement imposed by the lever 4 coupled to the arm 5 and to the handle 105. The movable wall 301 inside the infusion chamber 1 has come into close contact with the bottom wall 201 and the perforating means 231 are already in contact with the bottom wall 14 of the prepackaged charge.

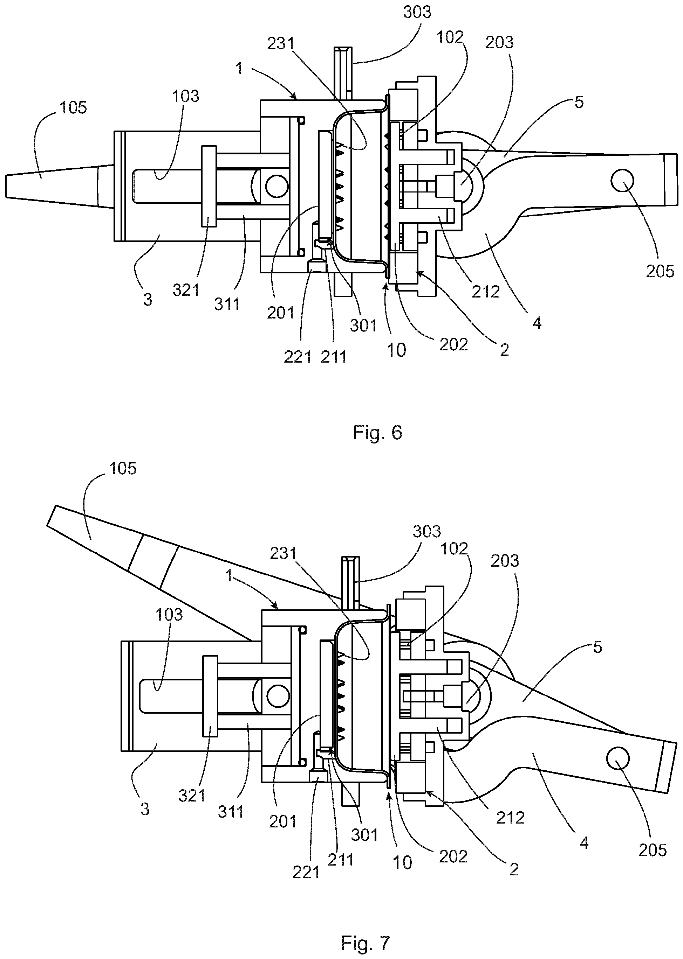

In the delivery step of Figure 6, the infusion chamber 1 and the supply head 2 are coupled together, and the beverage can be dispensed freely; also the movable wall 202 of the supply head 2 has moved so as to expose the perforating ends of the supply ducts 102. In the next step, shown in Figure 7, the delivery has just ended, and disengaging the handle 105 from the position of delivery, the coupling between the infusion chamber 1 and the feeding head 2 is solved, with the movable wall 202 of the supply head, mounted on rods 212 which provide elastic return means (not shown in the figure), which separates the closing wall 13 of the prepackaged charge from the supply conduits 102 of the aforesaid supply head 2.

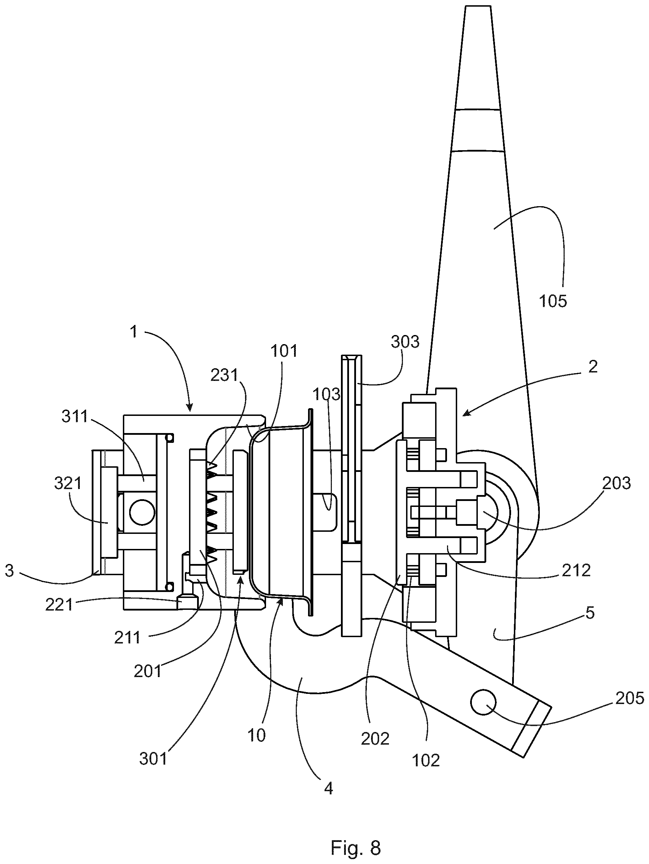

Finally, Figure 8 illustrates the expulsion of the prepacked charge 10 from the infusion chamber 1, when the infusion chamber 1, due to the action of the lever 4, reaches the bottom of the frame, and the crosspiece 321 pushes through the stems 311 the movable wall well above the bottom wall of the infusion chamber, so as to cause the prepackaged charge 10 to come out, which charge may at this point fall by gravity into a suitable collection container, such as for example the container 23 illustrated in Figure 1.

The use of a prepacked charge in paper or similar hygroscopic material makes it difficult to extract it from the infusion chamber, since the annular flange loses consistency and can hardly be used to grasp and expel the prepackaged charge, whereas the bottom wall, which it could also have already been pierced, as in the case described, it would be destroyed by an expeller not properly studied. The movable wall 301 illustrated in Figures 3 and 4 solves the problem appropriately, being formed by a plurality of strips 331, substantially equidistant from each other, arranged on planes secant in respect to the plane of the bottom wall 201, and oriented along the direction parallel to the direction of fall of the prepackaged charge. In this way, the contact surface between movable wall 301 and bottom wall 14 of the prepackaged charge 10 is reduced, but the ejection thrust is completely efficiently distributed, which will not damage the same bottom wall 14. At the same time, the reduction of the contact surface will guarantee the prevention of possible tacking between the aforesaid bottom wall 14 of the prepacked charge 10 and the movable wall 301. Advantageously, radial projections 341 protrude from the strips 331, which serve the purpose during their lifting and lowering movement, to clean the outflow channels of the beverage next to the perforating means 231.

On the supply head 2 a movable wall 202 can be mounted, which also favors the expulsion of the prepacked charge 10, and furthermore helps to protect the tips of the supply ducts 102, thus making the use of the infusion unit according to the present invention more safe. Clearly, this system can be even more simply used with prepacked fillers of mechanically better performing materials than cellulose and the like, without the need for precautions such as to escape from the purpose of protecting the present application.

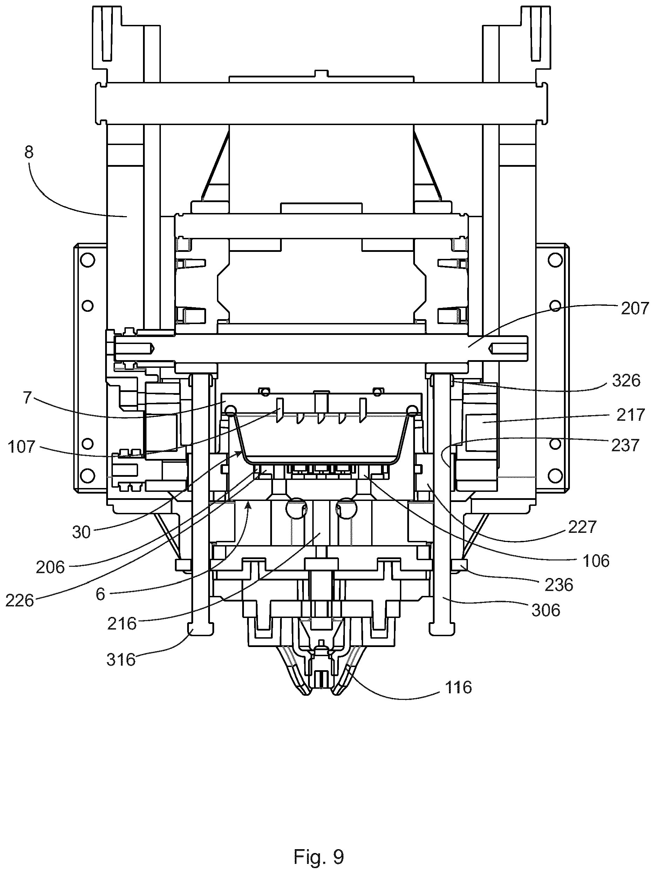

Figure 9 illustrates a second embodiment of the infusion group according to the present invention, in the dispensing phase of the beverage; with the numeral 6 the infusion chamber is designated, provided on its bottom wall with the dispensing ducts 106, communicating with the dispensing nozzle 116. The chamber 6 houses a prepackaged charge 30, which is enclosed in the chamber 6 by the supply head 7, provided with the supply ducts 107. The supply head 7 is mounted on the slide 207, to which the arms 217 which support the guides 227 intended to interact with the flange protruding from the prepackaged charge 30 are integral; the slide 207 runs on the rail 8. The guides 227 are provided with through holes 237, in which the pins 306 are inserted, which also cross the crosspiece 236 and are provided at the end facing towards the said crosspiece with the enlargement 316, while at the opposite end they have the reliefs 326. The crosspiece 236 is coupled by means of the rod 216 passing through the infusion chamber 6, to the movable wall 206 located near the bottom wall of the infusion chamber 6, and provided with the openings 226.

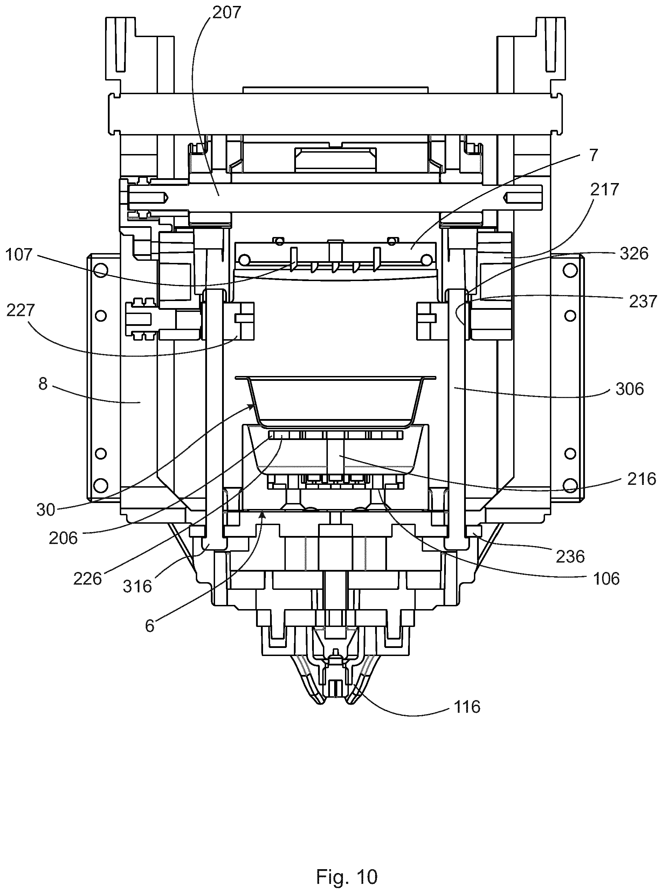

Figure 10 illustrates the infusion assembly of the embodiment of Figure 9, in the phase of expulsion of the prepacked charge 30; to the equal parts correspond equal numerals. The figure highlights the fact that, unlike the embodiment of Figures 1 to 8, in this case it is not an interaction with an element of the frame of the infusion unit to cause the movable wall 206 to be raised, but it is the interaction with the pins 306, which are coupled sliding between the feeding head 7 and the infusion chamber 6. This driving system is as functional as the one described above, but more reliable from the standpoint of control, since the two pins 306 substantially connect the crosspiece 236 which moves the stem 216 directly coupled to the slide 207 of the supply head 7, giving such movement a simpler and more effective guide.

It should also be noted that in this case the movable wall 206 has a plurality of openings but does not include perforating means, since the prepacked charge 30 is a charge in permeable material, and does not need to be perforated; the presence of openings for a substantial portion of the movable wall surface avoids the possibility of tacking the bottom wall of the prepacked charge to the surface of the movable wall itself.

## Claims

1. Infusion group for machines for preparing beverages which use prepackaged charges, comprising: an infusion chamber intended to house the container body of a prepackaged charge of edible material, said infusion chamber being provided with means for collecting and dispensing the prepared beverage; a pressurized water supply head, designed to mate with said infusion chamber so as to allow dispensing of the beverage, expelling means of the exhausted prepackaged charge being provided in said infusion group; said expulsion means comprise a wall, substantially arranged in close proximity to the bottom wall of said infusion chamber, having substantially the same dimensions as said bottom wall, provided with a plurality of through openings for a substantial portion of its surface, and moving along a direction parallel to the longitudinal axis of said infusion chamber, and coupled in its movement to the means allowing the coupling and separation of the infusion chamber with the said supply head.

2. Infusion group according to claim 1, in which said movable wall is formed by a plurality of strips equidistant from each other.

3. Infusion group according to claim 2, wherein said movable wall is housed in a series of cavities formed in the bottom wall of the infusion chamber, and connected with the collection and dispensing means of the beverage.

4. Infusion group according to claim 2 or 3, wherein said strips are arranged secant with respect to the plane of the bottom wall of said infusion chamber, and parallel to one another, along directions parallel to the direction of fall of the prepacked charge.

5. Infusion group according to any one of the previous claims from 2 to 4, wherein the movable wall is provided with means suitable for cleaning the beverage collection channels.

6. Infusion group according to any of the previous claims from 2 to 5, wherein also the pressure water supply head is provided, near the wall from which the water supply means protrude, of a movable wall similar to that provided in the infusion chamber.

7. Infusion group according to any of the previous claims from 1 to 6, wherein said movable wall is coupled to at least one stem passing through said infusion chamber, which at the end opposite to that connected to said movable wall is connected to the coupling and separation means of the infusion chamber with the supply head.
